# EUROPEAN PATENT SPECIFICATION

(11) **EP 4 111 105 B1**
(45) Date of publication and mention of the grant of the patent: **20.03.2024**
(21) Application number: 21709497.8
(22) Date of filing: 17.02.2021
(51) Int. Cl.: F24S 30/422, H02S 20/32, F24S 40/10

(54) **SOLAR TRACKER AND COMBINATION OF SUCH A SOLAR TRACKER AND A DEVICE CARRIED BY THE SOLAR TRACKER**
SONNENFOLGER UND KOMBINATION EINES SOLCHEN SONNENFOLGERS UND EINER VOM SONNENFOLGER GETRAGENEN VORRICHTUNG
SUIVEUR SOLAIRE ET COMBINAISON D'UN TEL SUIVEUR SOLAIRE ET D'UN DISPOSITIF PORTÉ PAR LE SUIVEUR SOLAIRE

(30) Priority: 27.02.2020 NL 1043578
(43) Date of publication of application: 04.01.2023
(73) Proprietor: Delyvin B.V., 8131 TW Wijhe (NL)
(72) Inventor: ALBERS, Gerhardus Henricus Maria, 8131 TW WIJHE (NL)
(74) Representative: Peters, Sebastian Martinus
(86) International application number: PCT/NL2021/000001
(87) International publication number: WO 2021/172979

(56) References cited:
- EP-A1- 2 660 535
- WO-A1-2009/122450
- WO-A1-2011/147437
- WO-A1-2014/056176
- CN-A- 106 322 801
- FR-A1- 2 949 549
- GB-A- 2 442 982
- JP-A- S57 188 965
- JP-A- 2013 028 953
- KR-A- 20110 112 047
- US-A1- 2008 040 990
- US-B1- 8 487 180

## Description

### Field of the invention

The invention relates to a solar tracker configured and suitable for being placed on an at least substantially horizontal ground surface and configured and suitable for carrying a device and comprising:
- a first part configured and suitable for being fixed to the ground surface by means of first mounting means provided for this purpose;
- a second part configured and suitable for mounting the device thereon by means of second mounting means provided for this purpose; and
- rotation means configured and suitable for rotating the second part relative to the first part about an at least substantially vertical rotation axis.

The invention also relates to a combination of such a solar tracker and a device carried by the solar tracker.

### Background of the invention

A solar tracker or sun position tracker is an apparatus which carries a device, such as a mounting frame with a number of solar panels, a solar heat collector, a mirror or lens, and can adjust the position thereof such that the movement of the sun is tracked to greater or lesser extent for the purpose of increasing the amount of sunlight collected by the device. Many embodiments thereof are found in patent documents classified within the IPC groups H02S20 and F24S30, such as US2008/040990A1, FR2949549A1, GB2442982A, KR20110112047A, CN106322801A, WO2014/056176A1, WO2011/147437A1, US8487180B1, JP2013028953A, JPS57188965A, WO2009/122450A1 and EP2660535A1.

Known solar trackers have one or more of the following drawbacks. They are mechanically complex, vulnerable and unsafe, the position of the device in question is adjustable only to limited extent and/or cannot be adjusted properly, they require a lot of maintenance and they do not have an attractive appearance. The present invention now provides a solar tracker which does not have said drawbacks, or at least does so to lesser extent, and in addition has a number of unique advantages of its own.

### Summary of the invention

The invention provides a solar tracker of said type, characterized in that the second part takes the form of a pan which is directed with its open side toward the ground surface and forms a receiving space in which the first part and the rotation means are at least substantially received. The second part thus shields the first part from the environment and also forms part of the carrying and rotating structure. Such a solar tracker is simple, robust, durable, safe, low-maintenance and moreover has an attractive appearance.

In the context of the invention 'pan' is understood to mean an object comprising a substantially round plate ('bottom') and a wall ("upright edge') extending from the main surface thereof on the periphery thereof and forming an opening ('open side') lying opposite the plate, all this just as in a common cooking pan. In the context of the invention relative terms such as 'horizontal', 'vertical', 'under' and 'on' are always understood to mean 'horizontal in a situation of use', 'vertical in a situation of use', and so on.

The invention also provides a combination of a solar tracker according to the invention and a device carried by the solar tracker. The device can here for instance comprise a mounting frame with a number of solar panels or a solar heat collector.

### Brief description of the drawings

The invention is further elucidated hereinbelow on the basis of non-limitative exemplary embodiments. In the drawings:

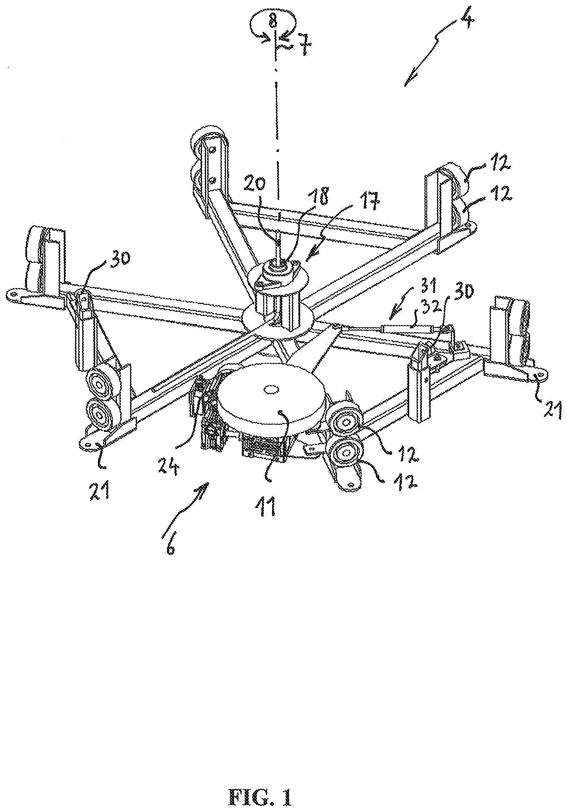

- figure 1 shows a perspective view of a first part of a solar tracker according to the invention;

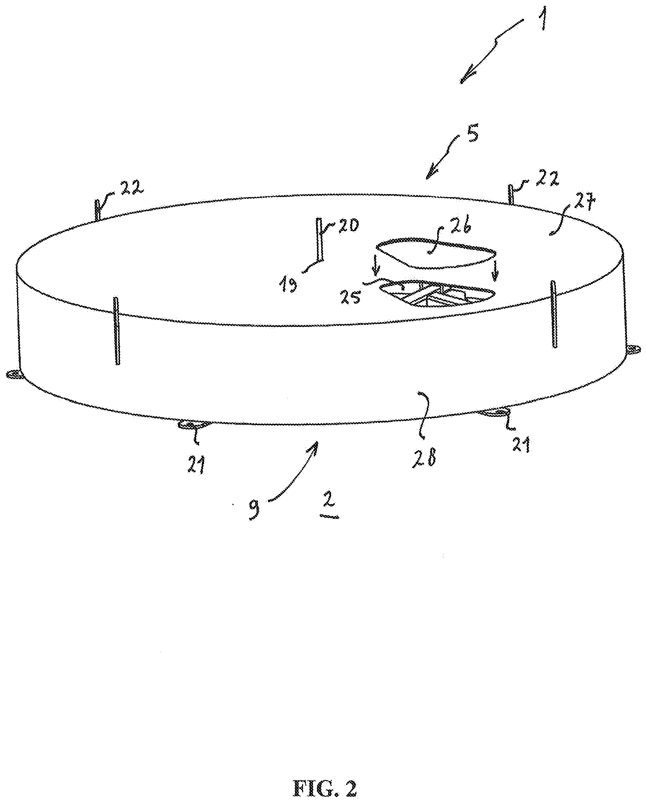

- figure 2 shows a perspective view of the whole solar tracker;

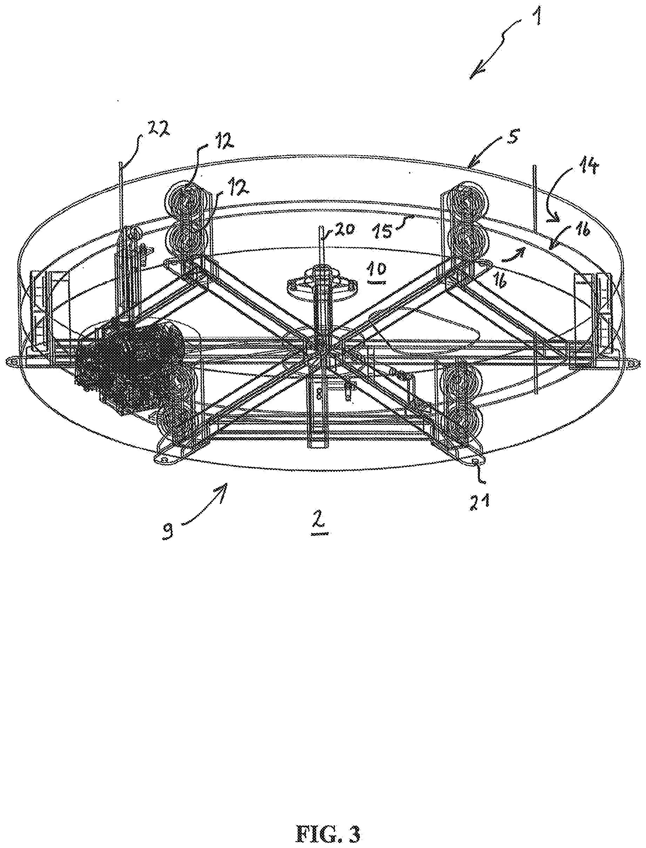

- figure 3 shows the same, with a second part shown in transparent view; and

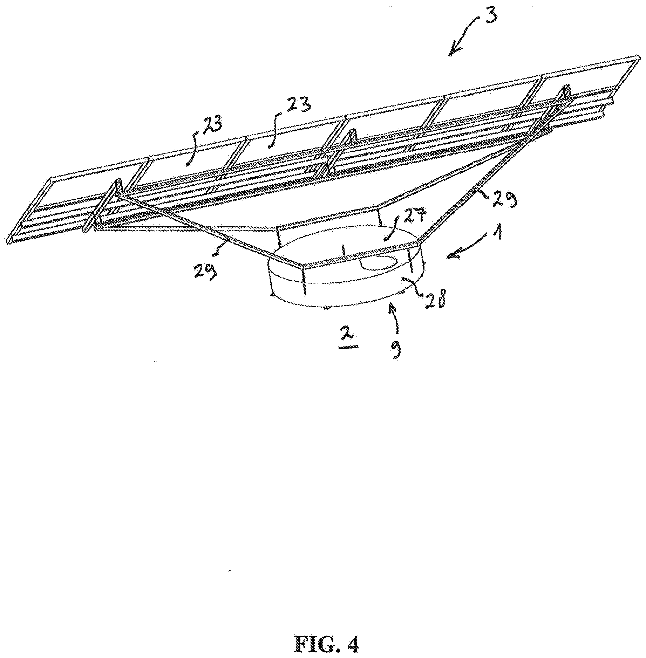

- figure 4 shows a perspective view of a combination of the solar tracker and a device carried by the solar tracker according to the invention.

### Exemplary embodiments

The solar tracker (1) according to the invention and shown in the drawings is placed on a horizontal ground surface (2), here a concrete slab (not shown) resting on the earth's surface, and carries a device (3), here a first mounting frame (29) with a number of solar panels (23) mounted thereon. In another embodiment of a combination according to the invention the device can for instance also be a solar heat collector.

The solar tracker (1) comprises a first part (4), here a second mounting frame, which is fixed by means of first mounting means (21) to the ground surface (2), and a second part (5) on which the device (3) is mounted by means of second mounting means (22). The solar tracker (1) also comprises rotation means (6) for rotating (8) the second part (5) relative to the first part (4) about a vertical rotation axis (7). According to the invention, the second part (5) now takes the form of a pan which is directed with its open side (9) toward the ground surface (2) and which forms a receiving space (10) in which the first part (5) and the rotation means (6) are received. The first part (5) and the rotation means (6) are thus shielded from the environment, this making the solar tracker more durable, safe and low-maintenance, and moreover giving it an attractive appearance. The pan-like second part (5) also forms part of the carrying and rotating structure.

For mounting and inspection the upward directed 'bottom' (27) of the pan-like second part (5) is provided with an opening (25), here closed with a cover plate (26), although this can for instance also be a cover slide. The rotation means (6) comprise here a drive wheel (11) which is mounted rotatably about a vertical rotation axis on the first part (4) and is pressed against the inner side (14) of the side wall (28) of the pan-like second part (5) by means of pressing means (31), here comprising a gas spring (32), and thus engages on the second part (5).

The rotation means (6) here also comprise six pairs of guide rollers (12) which are mounted rotatably about horizontal rotation axes on the first part (4). The second part (5) is here provided on the inner side (14) of the "upright edge'/side wall (28) thereof with a horizontal flange (15), wherein the six guide rollers (12) support in pairs on the two flat sides (16) of the flange (15). A robust and stable vertical guiding of the rotation movement (8) of the second part (5) relative to the first part (4) is thus obtained. Vertical and/or horizontal guiding can for instance also take place wholly or partially by means of at least three guide rollers supporting on the inner side of the 'bottom' (27) and/or the inner side (14) of the side wall (28) of the pan-like second part (5). The solar tracker (1) here also comprises a bearing (17) which mutually connects the first part (4) and the second part (5), such that the second part (5) can rotate relative to the first part (4) about the rotation axis (7), and provides for a horizontal guiding of the rotation movement (8) of the second part (5) relative to the first part (4).

The bearing (17) comprises here a first central passage (18) and the second part (5) a second central passage (19) co-acting therewith, through which passages (18, 19) a cable (20) is led from the device (3) to the receiving space (10) for the purpose of conducting electric current generated by means of the solar panels (23). The device (1) here also comprises two stops (30) whereby the rotation range of the second part (5) relative to the first part (4) is limited.

It will be apparent that the invention is not limited to the given exemplary embodiments, but that diverse embodiments obvious to a skilled person are possible within the scope of the invention.

### Reference numerals used

- 1: solar tracker
- 2: ground surface [concrete slab resting on the earth's surface]
- 3: device [first mounting frame (29) with solar panels (23)]
- 4: first part [second mounting frame]
- 5: second part [pan-like]
- 6: rotation means [5↔4]
- 7: rotation axis [vertical]
- 8: rotation [about 7]
- 9: 'open side' [of 5]
- 10: receiving space
- 11: drive wheel
- 12: guide roller [5↔4]
- 14: inner side [of 28]
- 15: flange
- 16: flat side [of 15]
- 17: bearing [4↔5]
- 18: first passage [in 17]
- 19: second passage [in 27]
- 20: cable [electrical]
- 21: first mounting means [4↔2]
- 22: second mounting means [3↔5]
- 23: solar panel
- 24: electric motor
- 25: opening [in 27 for mounting/inspection]
- 26: cover plate [for covering 25]
- 27: 'bottom' [of 5]
- 28: 'upright edge' / side wall [of 5]
- 29: first mounting frame [part, of 3]
- 30: stop

## Claims

1. Solar tracker (1) configured and suitable for being placed on an at least substantially horizontal ground surface (2) and configured and suitable for carrying a device (3) and comprising:
- a first part (4) configured and suitable for being fixed to the ground surface (2) by means of first mounting means (21) provided for this purpose;
- a second part (5) configured and suitable for mounting the device (3) thereon by means of second mounting means (22) provided for this purpose; and
- rotation means (6) configured and suitable for rotating (8) the second part (5)
relative to the first part about an at least substantially vertical rotation axis (7), **characterized in that** the second part (5) takes the form of a pan which is directed with its open side (9) toward the ground surface (2) and which forms a receiving space (10) in which the first part (5) and the rotation means (6) are at least substantially received.

2. Solar tracker (1) according to claim 1, **characterized in that** the rotation means (6) comprise a drive wheel (11) which is mounted rotatably on the first part (4) and engages on the second part (5).

3. Solar tracker (1) according to claim 1 or 2, **characterized in that** the rotation means (6) comprise at least three guide rollers (12) which are mounted rotatably on the first part (4) and at least substantially touch the second part (5).

4. Solar tracker (1) according to claim 3, **characterized in that** the second part (5) is provided with a flange (15) extending at least substantially horizontally from an inner side (14) of the second part (5), wherein at least six guide rollers (12) at least substantially touch both flat sides (16) of the flange (15) in pairs.

5. Solar tracker (1) according to any one of the foregoing claims, **characterized in that** the solar tracker (1) also comprises a bearing (17) which mutually connects the first part (4) and the second part (5), such that the second part (5) can rotate relative to the first part about the rotation axis (7).

6. Solar tracker (1) according to claim 5, **characterized in that** the bearing (17) comprises a first passage (18) and the second part (5) a second passage (19) co-acting therewith, which are configured and suitable for leading a cable (20) therethrough from the device (3) to the receiving space (10).

7. Combination of a solar tracker (1) according to any one of the foregoing claims and a device (3) carried by the solar tracker (1),

8. Combination according to claim 7, **characterized in that** the device (1) comprises a solar panel (23).

9. Combination according to claim 7, **characterized in that** the device comprises a solar heat collector.

## Patentansprüche

1. Sonnenfolger (1), der dazu ausgebildet und geeignet ist, auf einer wenigstens im Wesentlichen horizontalen Grundfläche (2) platziert zu werden, und der dazu ausgebildet und geeignet ist, ein Gerät (3) zu tragen, und umfassend:
- einen ersten Teil (4), der dazu ausgebildet und geeignet ist, auf der horizontalen Grundfläche (2) befestigt zu werden, und zwar mittels erster, für diesen Zweck bereitgestellter Montagemittel (21);
- einen zweiten Teil (5), der dazu ausgebildet und geeignet ist, das Gerät (3) daran zu befestigen, und zwar mittels zweiter, für diesen Zweck bereitgestellter Montagemittel (22); und
- Drehmittel (6), die dazu ausgebildet und geeignet sind, den zweiten Teil (5) bezüglich des ersten Teils um eine wenigstens im Wesentlichen vertikale Drehachse (7) zu drehen (8),
**dadurch gekennzeichnet, dass** der zweite Teil (5) die Gestalt einer Pfanne annimmt, die derart ausgerichtet ist, dass ihre offene Seite (9) der Grundfläche (2) zugewandt ist und die einen Aufnahmeraum (10) bildet, in welchen der erste Teil (1) und die Drehmittel (6) wenigstens im Wesentlichen aufgenommen sind.

2. Sonnenfolger (1) gemäß Anspruch 1, **dadurch gekennzeichnet, dass** die Drehmittel (6) ein Treibrad (11) umfassen, das drehbar am ersten Teil (4) montiert ist und mit dem zweiten Teil (5) in Eingriff steht.

3. Sonnenfolger (1) gemäß Anspruch 1 oder 2, **dadurch gekennzeichnet, dass** die Drehmittel (6) wenigstens drei Führungswalzen (12) umfassen, die drehbar am ersten Teil (4) montiert sind und wenigstens im Wesentlichen den zweiten Teil (5) berühren.

4. Sonnenfolger (1) gemäß Anspruch 3, **dadurch gekennzeichnet, dass** der zweite Teil (5) mit einem Flansch (15) ausgestattet ist, der sich wenigstens im Wesentlichen horizontal von einer inneren Seite (14) des zweiten Teils (5) erstreckt, wobei wenigsten sechs Führungswalzen (12) wenigstens im Wesentlichen beide Flachseiten (16) des Flansches (15) paarweise berühren.

5. Sonnenfolger (1) gemäß einem der vorstehenden Ansprüche, **dadurch gekennzeichnet, dass** der Sonnenfolger (1) auch ein Lager (17) umfasst, welches den ersten Teil (4) und den zweiten Teil (5) miteinander derart verbindet, dass sich der zweite Teil (5) bezüglich des ersten Teils (4) um die Drehachse (7) rotieren kann.

6. Sonnenfolger (1) gemäß Anspruch 5, **dadurch gekennzeichnet, dass** das Lager (17) einen ersten Durchgang (18) und der zweite Teil (5) einen damit zusammenwirkenden zweiten Durchgang (19) umfasst, welche dazu ausgebildet und geeignet sind, dahindurch ein Kabel (20) vom Gerät (3) zum Aufnahmeraum (10) zu führen.

7. Kombination eines Sonnenfolgers (1) gemäß einem der vorstehenden Ansprüche mit einem von dem Sonnenfolger (1) getragenen Gerät (3).

8. Kombination gemäß Anspruch 7, **dadurch gekennzeichnet, dass** das Gerät (1) ein Sonnen-Paneel (23) umfasst.

9. Kombination gemäß Anspruch 7, **dadurch gekennzeichnet, dass** das Gerät einen Sonnen-Wärmekollektor umfasst.

## Revendications

1. Suiveur solaire (1) configuré et approprié pour être placé sur une surface de sol au moins sensiblement horizontale (2) et configuré et approprié pour porter un dispositif (3) et comprenant:
- une première partie (4) configurée et appropriée pour être fixée sur la surface de sol (2) à l'aide de premiers moyens de montage (21) prévus à cet effet;
- une deuxième partie (5) configurée et appropriée pour monter le dispositif (3) sur celle-ci à l'aide de deuxièmes moyens de montage (22) prévus à cet effet; et
- des moyens de rotation (6) configurés et appropriés pour faire tourner (8) la deuxième partie (5) par rapport à la première partie autour d'un axe de rotation au moins sensiblement vertical (7),
**caractérisé en ce que** la deuxième partie (5) prend la forme d'une poêle qui est dirigée avec son côté ouvert (9) vers la surface de sol (2) et qui forme un espace de réception (10) dans lequel la première partie (5) et les moyens de rotation (6) sont au moins sensiblement reçus.

2. Suiveur solaire (1) selon la revendication 1, **caractérisé en ce que** les moyens de rotation (6) comprennent une roue d'entraînement (11) qui est montée de manière à pouvoir tourner sur la première partie (4) et s'engage sur la deuxième partie (5).

3. Suiveur solaire (1) selon la revendication 1 ou 2, **caractérisé en ce que** les moyens de rotation (6) comprennent au moins trois rouleaux de guidage (12) qui sont montés de manière à pouvoir tourner sur la première partie (4) et touchent au moins sensiblement la deuxième partie (5) .

4. Suiveur solaire (1) selon la revendication 3, **caractérisé en ce que** la deuxième partie (5) est dotée d'une bride (15) s'étendant au moins sensiblement horizontalement depuis un côté intérieur (14) de la deuxième partie (5), dans lequel au moins six rouleaux de guidage (12) touchent au moins sensiblement les deux côtés plats (16) de la bride (15) en paires.

5. Suiveur solaire (1) selon l'une quelconque des revendications précédentes, **caractérisé en ce que** le suiveur solaire (1) comprend également un palier (17) qui relie mutuellement la première partie (4) et la deuxième partie (5), de sorte que la deuxième partie (5) puisse tourner par rapport à la première partie autour de l'axe de rotation (7) .

6. Suiveur solaire (1) selon la revendication 5, **caractérisé en ce que** le palier (17) comprend un premier passage (18) et la deuxième partie (5) comprend un deuxième passage (19) coopérant avec le premier passage, qui sont configurés et appropriés pour conduire un câble (20) à travers ceux-ci depuis le dispositif (3) jusqu'à l'espace de réception (10).

7. Combinaison d'un suiveur solaire (1) selon l'une quelconque des revendications précédentes et d'un dispositif (3) porté par le suiveur solaire (1).

8. Combinaison selon la revendication 7, **caractérisée en ce que** le dispositif (1) comprend un panneau solaire (23) .

9. Combinaison selon la revendication 7, **caractérisée en ce que** le dispositif comprend un collecteur de chaleur solaire.
